# FASCICULE DE BREVET EUROPEEN

(11) **EP 4 028 592 B1**
(45) Date de publication et mention de la délivrance du brevet: **04.10.2023**
(21) Numéro de dépôt: 20767584.4
(22) Date de dépôt: 10.09.2020
(51) Int. Cl.: D06M 15/03, A62D 5/00

(54) **PROCÉDÉ DE MODIFICATION D'UN FIL OU D'UNE SURFACE TEXTILE**
VERFAHREN ZUM MODIFIZIEREN EINES GARNS ODER TEXTILEN GEWEBES
METHOD FOR MODIFYING A YARN OR TEXTILE FABRIC

(30) Priorité: 11.09.2019 FR 1910024
(43) Date de publication de la demande: 20.07.2022
(73) Titulaire: Centre national de la recherche scientifique, 75016 Paris (FR); Institut National des Sciences Appliquées de Rouen Normandie, 76801 Saint-Etienne-du-Rouvray, Cedex (FR); Université de Rouen Normandie, 76130 Mont-Saint-Aignan (FR)
(72) Inventeur: ESTOUR, François, 76000 ROUEN (FR); CORNELIO, Benedetta, 76821 MONT SAINT-AIGNAN CEDEX (FR); VANDESTEENE, Marie, 38110 Saint Didier de la Tour (FR); FERREIRA, Isabelle, 69130 ECULLY (FR)
(74) Mandataire: Brevalex
(86) Numéro de dépôt international: PCT/EP2020/075393
(87) Numéro de publication internationale: WO 2021/048309

(56) Documents cités:
- EP-A1- 0 494 057
- US-A- 5 728 823
- US-B1- 7 048 769

## Description

La présente invention a pour objet un procédé de modification d'une surface ou d'un fil textile par immobilisation d'un dérivé de cyclodextrine sur ladite surface ou ledit fil. Elle a également pour objet un fil ou une surface textile modifié(e) sur lequel ou laquelle est immobilisé un dérivé de cyclodextrine, ainsi que les utilisations desdites surfaces ou desdits fils, notamment pour le piégeage et la dégradation d'agents neurotoxiques organophosphorés.

Les agents neurotoxiques organophosphorés sont des inhibiteurs irréversibles des acétylcholinestérases, enzymes clés de la neurotransmission cholinergique. Les agents de guerre chimique et les pesticides les plus puissants appartiennent à cette famille de composés. En cas de diffusion d'agents neurotoxiques organophosphorés dans l'atmosphère, le plus urgent est de pouvoir prendre les mesures qui s'imposent pour protéger les populations civiles ou militaires. Or, la défense chimique, en dépit des progrès récemment accomplis, présente d'incontestables lacunes.

L'utilisation possible d'armes chimiques au cours d'un conflit ou d'actes terroristes ainsi que l'éventualité d'une catastrophe chimique les impliquant, sans compter le risque d'exposition aux pesticides organophosphorés, posent le difficile problème d'une prise en charge collective de ce type d'intoxication. Il faut avant toute chose éviter la diffusion de l'agent toxique. La solution idéale serait donc d'avoir un dispositif de décontamination prêt à l'usage adapté aux besoins de ceux qui devront le mettre en oeuvre, et en particulier des intervenants de première ligne qui doivent être dotés d'instruments rapides et faciles à utiliser. Dans l'état actuel des choses, la technologie accessible ne répond pas à ces critères.

Compte tenu des faiblesses clairement identifiées dans les systèmes de décontamination existants, il est nécessaire de développer un nouveau moyen accessible aux services d'urgence.

L'utilisation d'épurateurs chimiques dont la structure est basée sur le motif d'une cyclodextrine pourrait permettre d'accéder, à un coût supportable, à un dispositif de décontamination suffisamment polyvalent pour être utilisé avant même l'identification du ou des agents neurotoxiques en cause. Il pourrait permettre de s'affranchir de surcroît des problèmes de stabilité liés aux bioépurateurs, voire des risques immunogènes liés à leur utilisation. De plus, ces structures macrocycliques sont plus facilement immobilisables que des protéines sur un support textile en vue de mettre au point un système de décontamination applicable sur diverses surfaces.

Les textiles dits « intelligents » intégrant des cyclodextrines modifiées peuvent donc répondre à cette problématique. Différentes cyclodextrines et leur application sur textiles sont divulguées notamment dans US-B-7048769, EP-A-494057 et US-A-5728823. Toutefois, à ce jour, aucun textile fonctionnalisé par un dérivé de cyclodextrine et susceptible d'exercer un effet décontaminant vis-à-vis des armes chimiques n'a encore été mis au point.

La présente invention a pour but de fournir un nouveau matériau de décontamination comprenant un élément chimio-actif de décontamination des agents neurotoxiques organophosphorés et présentant une bonne capacité d'épuration de certaines armes chimiques.

La présente invention a donc pour but de fournir un procédé permettant une fixation suffisamment forte de molécules d'épurateur chimique sur un support textile, sans altérer la structure dudit épurateur lors de l'immobilisation, tout en obtenant une efficacité de décontamination proche de celle de l'épurateur en solution.

Ainsi, la présente invention concerne un procédé de modification d'un fil ou d'une surface textile par immobilisation sur ledit fil ou ladite surface d'un dérivé de cyclodextrine comportant un groupement réactif vis-à-vis d'agents organophosphorés,
ledit dérivé de cyclodextrine répondant à la formule (I) suivante : 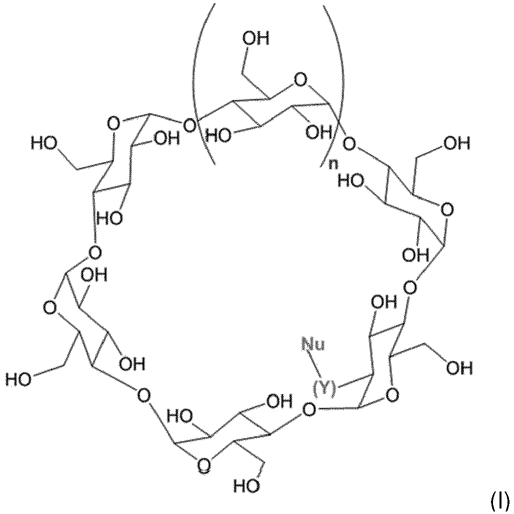 dans laquelle :
- n est 1, 2 ou 3 ;
- Y est un linker choisi dans le groupe constitué des groupements suivants :
   - -O-(CH₂)ₘ-, m étant 1, 2, ou 3, de préférence 1 ou 3 ; 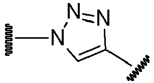
   - -NH-C(=O)-(CH₂)ₚ-, p étant 0, 1, ou 2, de préférence 0 ou 2 ;
   - -CONH-(CH₂)_{q}-, q étant 1, 2, ou 3, de préférence 1 ou 3 ;
   - -C(=O)O-(CH₂)ᵣ-, r étant 1, 2, ou 3, de préférence 1 ou 3 ;
   - -OC(=O)-(CH₂)ₛ-, s étant 0, 1, ou 2, de préférence 0 ou 2 ;
   - -O-CH₂-C≡C-(CH₂)ₜ-, t étant 1, 2, ou 3, de préférence 1 ou 3 ;
- Nu répond à la formule (II) suivante : 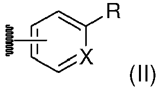 dans laquelle :
   - soit R est COOH et X est C-I=O,
   - soit R est CH=N-OH et X est N ou N⁺-(C₁-C₆)alkyle,
   - soit R est CO-NH-OH et X est N,

ledit procédé comprenant une étape (a) de mise en contact dudit fil ou de ladite surface textile avec le dérivé de cyclodextrine de formule (I) et avec un agent de pontage, tel qu'un acide polycarboxylique, choisi dans le groupe constitué de l'acide 1,2,3,4-butanetétracarboxylique, de l'acide succinique, de l'acide citrique, de l'acide oxalique et de leurs mélanges,
optionnellement en présence d'un catalyseur ou d'un agent de couplage choisi dans le groupe constitué du cyanamide, du *N*,*N*,*N*',*N*'-tétraméthyl-*O*-(*N-*succinimidyl)uronium tétrafluoroborate, du *O*-[*N*-succinimidyl)-1,1,3,3-tétraméthyluronium tétrafluoroborate (TSTU), du *O*-(5-norbornène-2,3-dicarboximido)-*N*,*N*,*N*',*N*'-tétraméthyluronium tétrafluoroborate (TNTU) et du chlorure de 4-(4,6-diméthoxy-1,3,5-triazin-2-yl)-4-méthylmorpholinium,
pour obtenir un fil ou une surface textile sur laquelle le dérivé de cyclodextrine de formule (I) est immobilisé.

La présente invention concerne également un procédé de modification d'un fil ou d'une surface textile par immobilisation sur ledit fil ou ladite surface d'un dérivé de cyclodextrine comportant un groupement réactif vis-à-vis d'agents organophosphorés,
ledit procédé comprenant une étape (a) de mise en contact dudit fil ou de ladite surface textile avec le dérivé de cyclodextrine de formule (I) susmentionnée et avec un agent de pontage choisi dans le groupe constitué de l'acide 1,2,3,4-butanetétracarboxylique, de l'acide succinique, de l'acide citrique, de l'acide oxalique et de leurs mélanges,
pour obtenir un fil ou une surface textile sur laquelle le dérivé de cyclodextrine de formule (I) est immobilisé.

La présente invention concerne également un procédé de modification d'un fil ou d'une surface textile par immobilisation sur ledit fil ou ladite surface d'un dérivé de cyclodextrine comportant un groupement réactif vis-à-vis d'agents organophosphorés,
ledit procédé comprenant une étape (a) de mise en contact dudit fil ou de ladite surface textile avec le dérivé de cyclodextrine de formule (I) susmentionnée et avec un agent de pontage choisi dans le groupe constitué de l'acide 1,2,3,4-butanetétracarboxylique, de l'acide succinique, de l'acide citrique, de l'acide oxalique et de leurs mélanges,
en présence d'un catalyseur ou d'un agent de couplage choisi dans le groupe constitué du cyanamide, du *N*,*N*,*N*',*N*'-tétraméthyl-*O*-(*N*-succinimidyl)uronium tétrafluoroborate, du *O*-[*N*-succinimidyl)-1,1,3,3-tétraméthyluronium tétrafluoroborate (TSTU), du *O*-(5-norbornène-2,3-dicarboximido)-*N*,*N*,*N'*,*N'*-tétraméthyluronium tétrafluoroborate (TNTU) et du chlorure de 4-(4,6-diméthoxy-1,3,5-triazin-2-yl)-4-méthylmorpholinium,
pour obtenir un fil ou une surface textile sur laquelle le dérivé de cyclodextrine de formule (I) est immobilisé.

Le procédé de l'invention est donc appliqué à un support textile pouvant être un fil textile ou une surface textile.

Selon un mode de réalisation, l'agent de pontage mis en oeuvre dans le procédé de l'invention est l'acide 1,2,3,4-butanetétracarboxylique.

Selon un mode de réalisation, le catalyseur mis en oeuvre dans le procédé de l'invention est le cyanamide.

Selon un mode de réalisation, le dérivé de cyclodextrine selon l'invention répond à la formule (I) susmentionnée dans laquelle Y est un linker de formule -O-(CH₂)ₘ-, m étant 1, 2, ou 3, et de préférence 1 ou 3.

Selon un mode de réalisation, dans la formule (I) susmentionnée, n est 2.

Selon un mode de réalisation, dans la formule (I) susmentionnée, Nu répond à la formule (II) dans laquelle R est COOH et X est C-I=O.

Un tel groupement fonctionnel existe sous deux formes en équilibre en solution aqueuse comme représenté par le schéma ci-dessous :

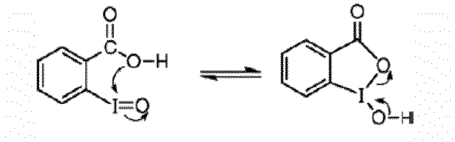

Ce groupement fonctionnel peut donc également être représenté par la formule (III) suivante :

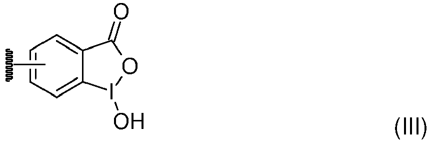

Le procédé de modification de surface ou de fil selon l'invention consiste donc en un procédé d'immobilisation d'un dérivé de cyclodextrine.

De préférence, le procédé de l'invention est mis en oeuvre pour modifier une surface textile.

Selon un mode de réalisation, la surface textile est choisie parmi les tissus, les nontissés, les tricots et les tresses.

Selon un mode de réalisation préféré, le dérivé de cyclodextrine mis en oeuvre dans le procédé de l'invention répond à la formule (IV) suivante :

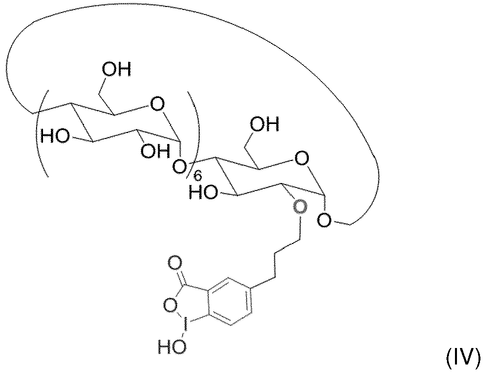

Selon un mode de réalisation, la surface textile est une surface dont le textile est choisi dans le groupe constitué de fibres synthétiques ou de fibres cellulosiques naturelles ou artificielles, lesdites fibres pouvant être seules ou en mélanges. Parmi ces textiles, on peut citer le coton, le lin, le chanvre, la viscose, l'acétate de cellulose, l'alcool polyvinylique et l'acrylique.

Selon un mode de réalisation, le fil textile est un fil de fibres cellulosiques naturelles ou artificielles. Parmi ces fils textiles, on peut citer les fils de coton, lin, chanvre, viscose, acétate de cellulose et alcool polyvinylique.

Parmi les textiles, on peut également mentionner les matériaux synthétiques tels que les polyamides et polyesters comme par exemple le PET et le PA.

Comme matériaux textiles, on peut également citer les mélanges à base de fibres naturelles, artificielles, et synthétiques. Par mélange, on entend à la fois le mélange de fibres de nature identique (naturelle, artificielle, synthétique), à savoir par exemple des mélanges de différentes fibres naturelles comme des mélanges de différentes fibres synthétiques, mais également le mélange de fibres de nature différente comme des mélanges de fibres naturelles et de fibres synthétiques.

De préférence, selon le procédé de l'invention, l'étape (a) est effectuée à une température inférieure à 145°C, de préférence inférieure à 1130°C, et notamment comprise entre 100°C et 130°C, de préférence entre 110°C et 125°C, et préférentiellement entre 118°C et 122°C.

Le procédé est donc mis en oeuvre de préférence dans des conditions douces de température, notamment afin de préserver l'intégrité de la structure du groupement réactif introduit sur la cyclodextrine qui est indispensable à l'activité hydrolytique vis-à-vis des agents neurotoxiques organophosphorés (= activité OPasique). La préservation de l'activité OPasique est vérifiée par un suivi spectrophotométrique UV-visible de la cinétique de dégradation du méthyl-paraoxon.

De préférence, l'étape (a) comprend une étape de thermofixation d'une durée comprise entre 1 et 20 minutes, de préférence entre 5 et 20 minutes, de préférence entre 5 et 15 minutes, et préférentiellement entre 8 et 12 minutes.

Cette gamme préférée permet une fixation suffisante du dérivé de cyclodextrine sans entrainer de dégradation significative de sa structure.

Selon un mode de réalisation, le procédé de l'invention comprend une étape supplémentaire, après l'étape (a) susmentionnée, à savoir une étape (b) de rinçage de la surface (ou du fil) textile sur laquelle le dérivé de cyclodextrine de formule (I) est immobilisé.

Cette étape de rinçage permet notamment d'enlever l'excédent d'agent de pontage. De préférence, cette étape est effectuée dans des conditions douces pour préserver l'activité OPasique du dérivé de cyclodextrine.

Selon un mode de réalisation, l'étape (b) susmentionnée est effectuée à une température inférieure à 40°C, de préférence entre 20°C et 40°C, et préférentiellement entre 20°C et 24°C.

De préférence, l'étape (b) est effectuée par trempage de la surface textile dans une solution aqueuse dont le pH est compris entre 5,5 et 7,65. Ces conditions préférées permettent de limiter le décrochage du dérivé de cyclodextrine immobilisé sur le support.

De préférence, la durée de l'étape (b) est inférieure à 90 minutes, de préférence est comprise entre 1 et 30 minutes, de préférence entre 10 et 30 minutes, et préférentiellement entre 15 et 20 minutes, par exemple entre 6 et 15 minutes.

Cette gamme préférée permet une élimination suffisante de l'agent de pontage en excès sans entrainer de décrochage significatif du dérivé de cyclodextrine immobilisé sur le support.

La présente invention concerne également une surface textile modifiée sur laquelle est immobilisé un dérivé de cyclodextrine répondant à la formule (I) telle que définie ci-dessus.

La présente invention concerne également un fil textile modifié sur lequel est immobilisé un dérivé de cyclodextrine répondant à la formule (I) telle que définie ci-dessus.

Selon un mode de réalisation, la surface textile modifiée comprend une surface textile telle que définie ci-dessus, sur laquelle est immobilisé un dérivé de cyclodextrine tel que défini ci-dessus.

Selon un mode de réalisation, le fil textile modifié comprend un fil textile tel que défini ci-dessus, sur lequel est immobilisé un dérivé de cyclodextrine tel que défini ci-dessus.

La présente invention concerne également une surface textile modifiée obtenue par le procédé tel que défini ci-dessus ou un fil textile modifié obtenu par le procédé susmentionné.

Le procédé de l'invention permet d'obtenir des taux d'immobilisation très satisfaisants des dérivés de cyclodextrine susmentionnés.

Selon l'invention, le taux moyen d'immobilisation désigne la quantité de dérivé de cyclodextrine immobilisé sur le support par unité de surface du textile. Le taux d'immobilisation est déterminé par la différence de masse obtenue par pesée du support avant et après traitement.

De préférence, la surface textile modifiée selon l'invention présente un taux moyen d'immobilisation du dérivé de cyclodextrine compris entre 2 et 8 g.m⁻², de préférence entre 4 et 7 g.cm⁻².

La surface textile modifiée selon l'invention présente en outre des propriétés mécaniques satisfaisantes. Le dérivé de cyclodextrine susmentionné est fixé de façon suffisamment forte sur la surface textile pour résister aux frottements effectués selon le test Crokmeter (Norme EN NF ISO 105-X12:2016). La force de l'immobilisation est appréciée par l'absence de perte significative de masse de l'échantillon, associée à une analyse par microscopie MEB-EDX de l'échantillon pour mettre en évidence la présence du dérivé de cyclodextrine sur le support.

Comme mentionné ci-dessus, l'immobilisation du dérivé de cyclodextrine susmentionné permet de maintenir l'activité OPasique dudit dérivé. Ainsi, la présente invention concerne également l'utilisation d'une surface textile modifiée telle que définie ci-dessus, pour le piégeage et la dégradation d'agents neurotoxiques organophosphorés.

La présente invention concerne également l'utilisation d'une surface textile modifiée telle que définie ci-dessus, à titre de textile auto-décontaminant.

### DESCRIPTION DES FIGURES

La Figure 1 représente les clichés MEB de différents échantillons de tissus (non traités, traités et non rincés, traités et rincés).
La Figure 2 représente le suivi d'hydrolyse du paraoxon en para-nitrophénol.
La Figure 3 représente les tests de recyclabilité.
Les Figures 4 et 5 représentent les résultats d'efficacité de l'exemple 6. La Figure 4 concerne les résultats pour un rinçage à pH=7,65 et la Figure 5 concerne les résultats pour un rinçage à pH=5,5.
Les Figures 6 et 7 représentent les résultats d'efficacité de l'exemple 7. La Figure 6 concerne les résultats pour un rinçage à pH=7,65 et la Figure 7 concerne les résultats pour un rinçage à pH=5,5.

### EXEMPLES

### Exemple 1 : Préparation de la surface textile modifiée

### 1. Immobilisation du dérivé de cyclodextrine

L'immobilisation du dérivé de cyclodextrine de formule (1) ci-dessous : 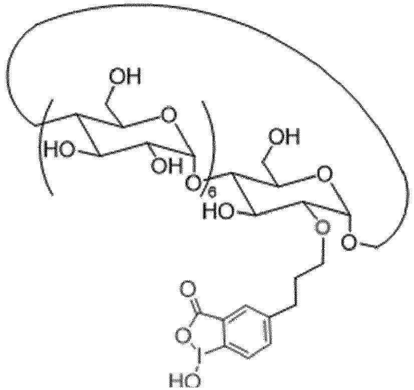 a été réalisée sur coton par l'utilisation d'un agent de pontage, l'acide 1,2,3,4-butanetétracarboxylique (BTCA), permettant de réticuler les unités oligosaccharidiques de l'épurateur (1) et de les greffer sur le support textile.

Le support textile (coton, format 5x5 cm, soit 225 cm²) a été immergé pendant 2 minutes dans un bain contenant le dérivé (1) de β-cyclodextrine (10%), l'acide 1,2,3,4-butanetétracarboxylique (BTCA, 6%), le cyanamide (5%) et le biphosphate d'ammonium (ADHP, 1%).

Le dérivé (1) a été préparé par la société Provepharm.

Le BTCA, le cyanamide et l'ADPH ont été fournis par la société Sigma-Aldrich.

Après foulardage à une pression de 1,5 bars, le tissu imprégné a été pré-séché pendant 30 minutes à 80°C. La fixation a été réalisée à 120°C pendant 10 minutes.

### 2. Protocole de rinçage

Un protocole de rinçage a été mis au point pour permettre d'éliminer le surplus de dérivé (1) et des réactifs résiduels utilisés pour l'immobilisation, en évitant un décrochage trop important du dérivé (1) immobilisé sur support.

Le tissu a été rincé par trempage dans 200mL d'une solution de tampon phosphate 20mM à pH 7,65 pendant 15 minutes à température ambiante et sans agitation. Le taux d'immobilisation déposé après rinçage a été évalué à 6,7g·m⁻² par détermination de la prise de masse de l'échantillon de tissu.

### 3. Résistance de l'immobilisation du dérivé (1)

Des échantillons ont été analysés par Microscopie Electronique à Balayage (MEB) associée à la microanalyse par Energie Dispersive de rayons X (EDX) afin de révéler la présence de l'élément iode (et donc du dérivé (1)).

Quatre échantillons de tissu ont été analysés :
- Tissu témoin (non traité) (Echantillon I)
- Tissu traité et non rincé (Echantillon II)
- Tissu traité et rincé (Echantillon III)
- Tissu traité, rincé et vieilli par frottement selon le test manuel Crokmeter* (Echantillon IV)

**L'appareil est équipé d'une cheville de 16 mm de diamètre qui se déplace dans un mouvement de va-et-vient rectiligne sur une longueur de 104 mm avec une force de 9N exercée vers le bas (Ref. : Norme EN NF ISO 105-X12:2016).*

Les résultats suivants sont obtenus comme indiqué dans le tableau 1 ci-dessous :

| | Iode (%) |
|---|---|
| Echantillon I | - |
| Echantillon II | 1,22 |
| Echantillon III | 0,92 |
| Echantillon IV | 0,88 |

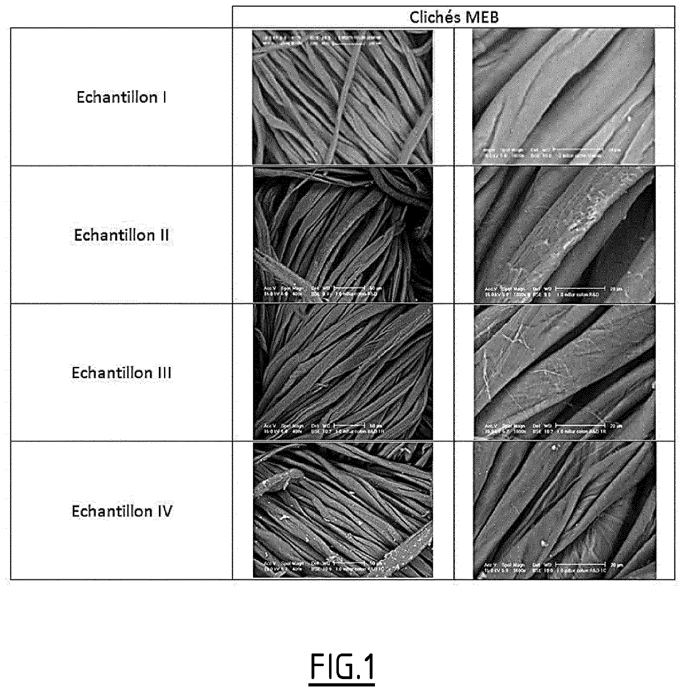

Les clichés MEB obtenus sont représentés dans la Figure 1.

L'analyse par microscopie MEB-EDX de l'échantillon permet de détecter l'élément iode dans les échantillons II, III et IV, prouvant ainsi la présence du dérivé (1) immobilisé sur le support. Cet élément est toujours détecté après rinçage, et après le test de frottements. L'absence de perte de masse de l'échantillon avant et après le test de Crokemeter a montré de manière complémentaire que l'immobilisation du dérivé (1) est à la fois résistante au rinçage et aux frottements du support.

### Exemple 2 : Efficacité du textile modifié

### • Evaluation de l'activité du tissu traité sur la dégradation du méthyl-paraoxon

2 échantillons d'une taille 5 x 5 cm ont été assemblés et cousus.

L'assemblage obtenu a été utilisé dans la suite du protocole.

L'hydrogénophosphate de sodium, l'acide phosphorique, le chlorure de cétyltriméthylammonium et le méthyl-paraoxon ont été fournis par la société Sigma-Aldrich.
**(1)** Une solution de tampon phosphate 20mM à pH 7,65 a été préparée en dissolvant 1,42g d'hydrogénophosphate de sodium anhydre dans 500mL d'eau milliQ^{®}. Le pH a été ajusté à 7,65 par addition d'une solution d'acide phosphorique et contrôlé au pH-mètre.
**(2)** Une solution de chlorure de cétyltriméthylammonium 13mM a été obtenue en dissolvant 416mg du produit dans 97mL du tampon préparé en **(1)** et 3 mL de diméthylsulfoxyde.
**(3)** Une solution de méthyl-paraoxon 16,67mM a été obtenue en dissolvant 41,2mg du produit dans 10mL de méthanol anhydre. Cette solution a été conservée en flacon scellé à 0°C.
**(4)** L'assemblage de tissu est plongé dans 16,2mL de la solution de chlorure de cétyltriméthylammonium préparée en **(2).** Au besoin, le pH est stabilisé entre 7,35 et 7,65 par addition d'hydrogénophosphate de sodium. La solution est thermostatée à une température de 25°C. 500µL de la solution de méthyl-paraoxon préparée en **(3)** sont ajoutés et le milieu est mélangé manuellement à l'aide d'une baguette en verre pendant 5 secondes. L'absorbance de la solution est mesurée à 400nm à intervalles réguliers de 4 minutes sur une durée maximale de 28 minutes. L'expérience a été répétée trois fois.
**(5)** L'hydrolyse spontanée du méthyl-paraoxon a été évaluée dans les mêmes conditions et en l'absence de l'assemblage de tissu. Les valeurs d'absorbance obtenues ont été déduites des mesures effectuées en **(4)** pour déterminer l'efficacité réelle du tissu traité.

Dans ces conditions, 32% de la quantité initiale de méthyl-paraoxon sont dégradés au bout de 20min en présence de l'assemblage de tissu.

### Exemple 3 : Détermination du taux moyen d'immobilisation de dérivé de β-cyclodextrine « accessible et actif » exprimé en g par m² de tissu

**(6)** Une solution 1mM du dérivé de β-cyclodextrine est obtenue en dissolvant 29,5 mg de produit dans 20mL de solution de chlorure de cétyltriméthylammonium 13mM contenant 3% de diméthylsulfoxyde préparé en **(2).**
**(7)** Une solution 0,5mM du dérivé de β-cyclodextrine est obtenue en diluant 10mL de la solution préparée en **(6)** dans 10mL de solution de chlorure de cétyltriméthylammonium 13mM contenant 3% de diméthylsulfoxyde préparé en **(2).**
**(8)** Une solution 0,25mM du dérivé de β-cyclodextrine est obtenue en dissolvant 10mL de la solution préparée en **(7)** dans 10mL de solution de chlorure de cétyltriméthylammonium 13mM contenant 3% de DMSO préparé en **(2).**
**(9)** 30µL de la solution préparée en **(3)** sont ajoutés à 970µL de la solution préparée en **(6).** La solution est thermostatée à une température de 25°C. L'absorbance de la solution est mesurée à 400nm en continu sur une durée de 30 minutes. Chaque expérience a été répétée trois fois.
**(10)** 30µL de la solution préparée en **(3)** sont ajoutés à 970µL de la solution préparée en **(7).** La solution est thermostatée à une température de 25°C. L'absorbance de la solution est mesurée à 400nm en continu sur une durée de 30 minutes. Chaque expérience a été répétée trois fois.
**(11)** 30µL de la solution préparée en **(3)** sont ajoutés à 970µL de la solution préparée en **(8).** La solution est thermostatée à une température de 25°C. L'absorbance de la solution est mesurée à 400nm en continu sur une durée de 30 minutes. Chaque expérience a été répétée trois fois.
**(12)** Trois droites d'étalonnage ont été obtenues à : T0 + 4min, T0 + 8min et T0 + 12 min par régression linéaire des valeurs d'absorbance mesurées en **(9), (10)** et **(11).**
**(13)** La quantité de dérivé de β-cyclodextrine actif et immobilisé sur l'assemblage de tissu est la moyenne des trois valeurs calculées à partir des équations de droites d'étalonnage obtenues pour T0 + 4min, T0 + 8min et T0 + 12 min.

Le taux d'immobilisation a ainsi été évalué à 5,3 g.m⁻².

### Exemple 4 : Conditions d'utilisation du support textile traité

L'assemblage de tissu après une première utilisation dans l'exemple 2 est plongé dans 17mL d'eau MilliQ^{®} pendant 1min sans agitation. Il est prélevé et successivement plongé quatre fois dans 17mL d'eau MilliQ^{®} pendant 5min sans agitation. Après séchage à l'air libre, il est soumis à une deuxième évaluation d'activité décontaminante dans les conditions expérimentales de l'exemple 2 (1^{er} recyclage).

L'assemblage de tissu après une deuxième utilisation est prélevé et successivement plongé quatre fois dans 17mL d'eau MilliQ^{®} pendant 5min sans agitation. Après séchage à l'air libre, il est soumis à une troisième évaluation d'activité décontaminante dans les conditions expérimentales de l'exemple 2 (2^{ème} recyclage).

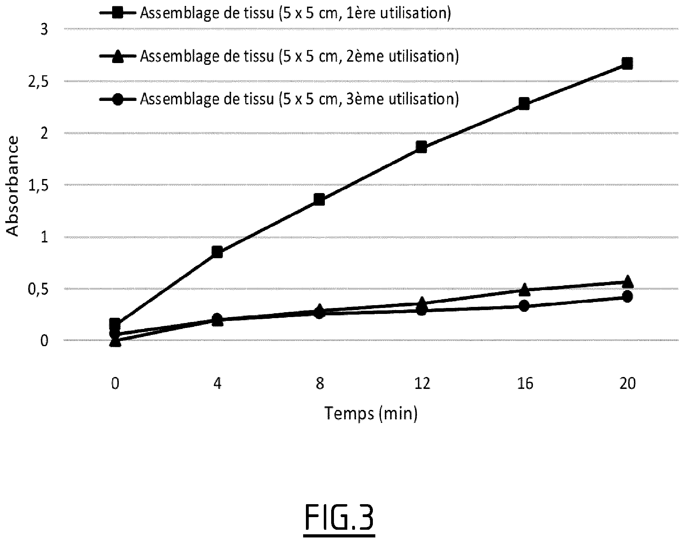

Une atténuation importante des capacités de décontamination est observée lors des 2^{ème} et 3^{ème} utilisations (Figure 3).

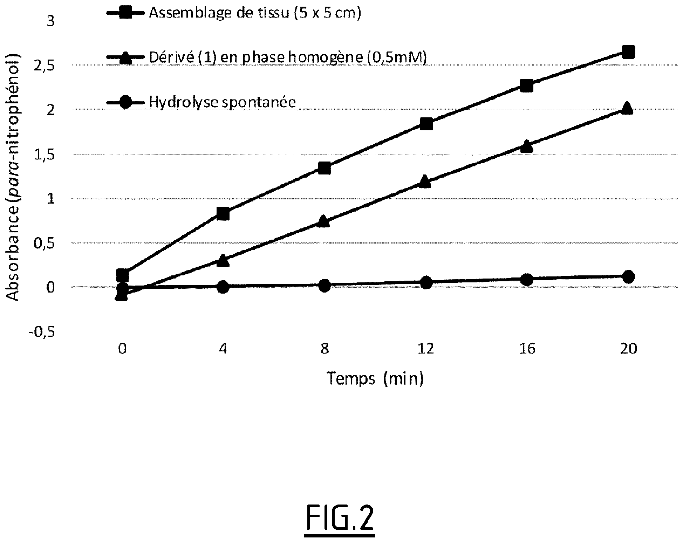

De manière complémentaire, un assemblage de tissu confectionné dans les conditions de l'exemple 2 est plongé dans 16,2mL de la solution de chlorure de cétyltriméthylammonium préparée en **(2)** (exemple 2). Au besoin, le pH est stabilisé entre 7,35 et 7,65 par addition d'hydrogénophosphate de sodium. La solution est thermostatée à une température de 25°C. Après 20 minutes, l'assemblage de tissu est retiré. 500µL de la solution de méthyl-paraoxon préparée en **(3)** (exemple 2) sont ajoutés et le milieu est mélangé manuellement à l'aide d'une baguette en verre pendant 5 secondes. L'absorbance de la solution est mesurée à 400nm à intervalles réguliers de 4 minutes sur une durée maximale de 28 minutes. Le profil cinétique d'hydrolyse du méthyl-paraoxon est similaire à celui obtenu avec l'assemblage de tissu dans l'exemple 2 (Figure 2).

Ces analyses mettent en évidence un décrochage de l'épurateur à partir du support textile plongé dans les conditions de décontamination, *i.e.* une solution tamponnée (7,35<pH<7,65), permettant de préserver une efficacité décontaminante équivalente à celle obtenue en phase homogène du dérivé de cyclodextrine (IV) lors d'une utilisation unique du support textile traité (système « jetable ») et de considérer l'assemblage de tissu usagé comme un déchet non toxique.

### Exemple 5 : Préparation de prototypes d'éponges et évaluation de son efficacité sur une arme chimique

### 1. Immobilisation du dérivé de cyclodextrine (1) et de la β-cyclodextrine

L'immobilisation du dérivé de cyclodextrine de formule (1) ci-dessous : 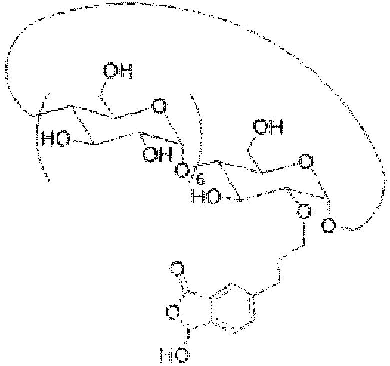 a été réalisée selon un protocole identique à celui mis en oeuvre dans l'exemple 1, seul le format du coton utilisé a été modifié pour passer d'une surface de 15 x 15 cm à un format A4.

Le même protocole que celui décrit ci-dessus a aussi été mis en oeuvre pour immobiliser la β-cyclodextrine de formule ci-dessous à la place du dérivé (1).

### 2. Protocole de rinçage

Le protocole de rinçage est identique à celui qui a été mis en oeuvre dans l'exemple 1 quel que soit le dérivé immobilisé (dérivé (1) ou β-cyclodextrine).

### 3. Efficacité du textile modifié

Vingt échantillons d'une taille 5 x 9 cm ont été assemblés par deux et cousus avec le textile modifié obtenu avec le dérivé (1) (Assemblages A = éponges A).

Vingt échantillons d'une taille 5 x 9 cm ont été assemblés par deux et cousus avec le textile modifié obtenu avec la β-cyclodextrine (Assemblages B = éponges B).

Vingt échantillons d'une taille 5 x 9 cm ont été assemblés par deux et cousus avec le textile non modifié (Assemblages C = éponges C).

Les différents assemblages (=éponges) obtenus ont été utilisés dans la suite du protocole.

### • Efficacité de décontamination du matériau

### - Protocole de contamination

8 éprouvettes d'inox de 5x5 cm sont contaminées par du soman à un taux de 5 g/m² par dépôt de 25 gouttes de 0,5 µL. Trois éprouvettes sont extraites pendant 90 minutes dans des pèse-filtres de 175 mL contenant 25 mL d'acétate d'éthyle puis un prélèvement de 1 mL est analysé par chromatographie en phase gazeuse afin de déterminer le taux de contamination initial.

Les cinq éprouvettes restantes sont placées devant cinq éprouvettes non contaminées. Celles-ci serviront à déterminer les transferts de contamination des plaques contaminées vers les plaques non contaminées lors de l'utilisation des éponges.

### - Protocole de décontamination - Mesure de la contamination résiduelle et des transferts de contamination

Une éponge (5x9 cm), fixée à l'aide d'un adhésif en aluminium sur une masse métallique de 500 g est appliquée pendant 1 à 2 s sur l'échantillon contaminé puis est déplacée vers l'échantillon non contaminé (pause d'1 à 2 s également). Dès la fin de l'application de l'éponge, les échantillons sont mis à extraire dans des pèse-filtres de 175 mL contenant 25 mL d'acétate d'éthyle (une seule extraction de 90 min puisque le matériau est non absorbant). Un échantillon de chaque pèse-filtre est prélevé pour analyse par GC. L'éponge est immergée dans 20 mL de tampon phosphate (0,1 M, pH 7,4) contenus dans un pèse-filtre de 175 mL.

Les prélèvements ont été analysés par chromatographie en phase gazeuse, selon les conditions d'analyse suivantes :

| | **Soman (GD)** |
|---|---|
| **Injecteur** | Mode : Splitless |
| | Température : 250 °C |
| | Gaz vecteur : Hélium |
| **Colonne** | VF-5ms (5% diphenylpolysiloxane, 95% dimethylpolysiloxane) |
| | ∅ colonne : 0,25 mm |
| | Débit gaz vecteur : 1,3 mL/min |
| | Température : 50 à 120 °C, 10 °C/min |
| | 120 à 250 °C, 15 °C/min |
| | Palier de 3 minutes |
| **Détecteur** | Type : FPD |
| | Température : 280 °C |

### - Résultats

Le taux de contamination mesuré sur 3 éprouvettes inox non contaminées par 25 gouttes de 0,5 µL de soman est de 403,8 ± 17,3 µg/cm².

Les résultats des essais de décontamination de 5 plaques inox successives (5 plaques de 25 cm² contaminées par 25 gouttes de 0,5 µL de soman) par les trois types d'éponges, réalisés selon le protocole sont dans le Tableau 2 et le Tableau 3 ci-dessous.

| **Grandeur mesurée** | **Eponge** | **Quantité extraite sur les plaques inox (µg/cm²)** | **Quantité moyenne (µg/cm²)** | **% décontamination** | % **décontamination moyen** |
|---|---|---|---|---|---|
| **Quantité résiduelle** | Assemblage A | 13,1 | 7,8 ± 3,9 | 96,75 | 98,1 ± 1,0 |
| | | 8,8 | | 97,82 | |
| | | 8,8 | | 97,83 | |
| | | 5,4 | | 98,67 | |
| | | 2,91 | | 99,28 | |
| | Assemblage B | 20,6 | 35,4 ± 12,8 | 94,90 | 91,2 ± 3,2 |
| | | 29,5 | | 92,71 | |
| | | 55,2 | | 86,34 | |
| | | 33,5 | | 91,70 | |
| | | 38,5 | | 90,47 | |
| | Assemblage C | 33,3 | 20,3 ± 8,2 | 91,76 | 95,0 ± 2,0 |
| | | 21,6 | | 94,65 | |
| | | 17,9 | | 95,67 | |
| | | 17,7 | | 95,61 | |
| | | 11,0 | | 97,28 | |

Les pourcentages de décontamination des plaques inox sont respectivement de 98,1% (Assemblage A), 91,2% (Assemblage B) et 95,0% (Assemblage C). L'assemblage A (tissu modifié par le dérivé (1)) a un effet décontaminant supérieur à celui de l'assemblage C de référence (tissu non modifié). L'assemblage B (tissu modifié par la β-cyclodextrine) a un effet décontaminant inférieur à celui de l'assemblage de référence C.

**Tableau 3 : Effiacité de décontamination de l'éponge TEXT-épur-OP sur cinq éprouvettes inox contaminées par du soman (125 cm² à g.m²)**

| **Grandeur mesurée** | **Eponge** | **Quantité extraite sur les plaques inox (µg/cm²)** | **Quantité moyenne (µg/cm²)** |
|---|---|---|---|
| **Transfert de contamination** | Assemblage A | 2,36 | 2,06 ± 1,15 |
| | | 0,23 | |
| | | 3,34 | |
| | | 1,80 | |
| | | 2,69 | |
| | Assemblage B | 1,33 | 0,91 ± 0,53 |
| | | 0,46 | |
| | | 0,26 | |
| | | 1,10 | |
| | | 1,42 | |
| | Assemblage C | < 0,12 | 0,16 ± 0,08 |
| | | < 0,12 | |
| | | 0,31 | |
| | | < 0,12 | |
| | | < 0,12 | |

Les transferts de contamination mesurés sur des plaques inox initialement non contaminées sont respectivement de 2,06 µg.cm⁻² (Assemblage A), 0,91 µg.cm⁻² (Assemblage B) et 0,16 µg.cm⁻² (Assemblage C). Les valeurs sont relativement faibles quel que soit le type d'assemblage.

### • Cinétique de dégradation du soman

### - Protocole

Deux suivis de cinétique de dégradation ont été réalisés : un premier avec un assemblage (A, B ou C) ayant décontaminé une seule plaque inox de 5 x 5cm, un second avec un assemblage (A, B ou C) ayant successivement décontaminé cinq plaques inox de 5 x 5 cm.

Le protocole suivant a été ensuite mis en oeuvre dans les deux cas :
L'éponge est immergée dans 20mL de tampon phosphate (0,1 M, pH 7,4) contenus dans un pèse-filtre de 175 mL. A *t* = 15 min, 1 h, 3 h et 6 h, le pèse-filtre est agité manuellement pour homogénéiser le tampon puis 500 µL sont prélevés, neutralisés avec 0,5mL de tampon citrate (0,2 M, pH 5,5) et extraits avec 3 mL d'acétate d'éthyle dans un tube à centrifuger de 15 mL. Le tube est centrifugé 1 min à 4000 trs/min puis un échantillon de la phase organique est prélevé pour analyse par GC.

A *t* = 24 h, le tampon est neutralisé par ajout de 18 mL de tampon citrate 0,2 M pH 5,5. L'éponge est égouttée, extraite par 25 mL d'acétate d'éthyle pendant 90 min puis un échantillon de la phase organique est prélevé pour analyse par GC. Le milieu neutralisé est homogénéisé puis 1 mL est prélevé puis extrait par 3 mL d'acétate d'éthyle dans un tube à centrifuger de 15 mL. Le tube est centrifugé 1 min à 4000 trs/min puis un échantillon de la phase organique est prélevé pour analyse par GC.

### Coefficient d'extraction :

Les quantités dosées doivent être corrigées par un coefficient d'extraction, déterminé préalablement selon le protocole suivant : une plaque inox est contaminée avec 25 gouttes de 0,5 µL de soman puis immergée dans un pèse-filtre de 175 mL contenant 20 mL de tampon phosphate (0,1 M, pH 7,4) et 20 mL de tampon citrate (0,2 M, pH 5,5). Le milieu est bien homogénéisé à l'aide d'une pipette de 10 mL. 1 mL du mélange est prélevé puis extrait avec 3 mL d'acétate d'éthyle dans un tube à centrifuger de 15 mL. Le tube est centrifugé 1 min à 4000 trs/min puis un échantillon de la phase est prélevé pour analyse par GC.

Les conditions d'analyses par chromatographie en phase gazeuse sont identiques aux précédentes.

### - Résultats

### Cinétique de dégradation du soman par les assemblages (A, B ou C) ayant décontaminé une seule plaque en inox (25 cm² à 5g.m²)

Les efficacités de dégradation du soman par les éponges ont tout d'abord été déterminées après « décontamination » d'une seule plaque inox de 25 cm² contaminée par 25 gouttes de 0,5 µL de soman. La contamination résiduelle sur ces plaques a été dosée, et a permis, à l'aide du taux de contamination d'en déduire la contamination absorbée par les éponges.

| | 15 min | 1h | 3h | 6h | 24h (tampon | 24h (éponge) | 24h (total) |
|---|---|---|---|---|---|---|---|
| Assemblage A | 44,9% | 14,2% | 0,17% | < 0,13 | - | < 0,03% | < 0,16% |
| Assemblage B | 63,7% | 46,3% | 19,5% | 8,3% | 0,32% | 0,62% | 0,95% |
| Assemblage C | 76% | 49,1% | 15,5% | 2,8% | < 0,13% | < 0,03% | < 0,16% |

Après 3 h d'immersion des assemblages, il ne reste plus dans le tampon phosphate que 0,17% du soman absorbé par l'assemblage A, contre 19,5% par l'assemblage B et 15,5% par l'assemblage C. Après 6 h d'immersion des différents assemblages, il n'y a plus de soman quantifié dans le tampon phosphate dans le cas de l'essai réalisé avec l'assemblage A, alors qu'il reste encore 8,3% et 2,8% de soman pour les essais respectivement réalisés avec les assemblages B et C. Après 24h, les essais sont arrêtés et les assemblages sont également extraits. Il n'y a pas de différence entre les assemblages A et C, seul l'essai réalisé avec l'assemblage B permet de détecter 0,62% de soman dans l'assemblage et 0,32% dans le tampon (soit un total de 0,95%).

*Cinétique de dégradation du soman par les assemblages (A, B ou C) ayant décontaminé cinq plaques en inox (125 cm² à 5g.m²)*

*Suite à la décontamination des cinq plaques intox de 25 cm² (contaminées par 25 gouttes de 0,5µL de soman), les efficacités de dégradation du soman par les éponges ont été déterminées après leur immersion dans le tampon phosphate pH 7,4. La contamination absorbée par les éponges a été déduite du taux de contamination et des quantités résiduelles mesurées par les plaques inox. Elle a été utilisée pour le calcul du pourcentage de soman résiduel dans le tampon et dans les éponges.*

| | 15 min | 1h | 3h | 6h | 24h (tampon | 24h (éponge) | 24h (total) |
|---|---|---|---|---|---|---|---|
| Assemblage A | 81,7% | 50,5% | 13,46% | 2,51% | < 0,03% | < 0,01 % | < 0,03% |
| Assemblage B | 81,7% | 63,9% | 29,8% | 13,4% | < 0,07% | < 0,78% | < 1,48% |
| Assemblage C | 74,9% | 61,7% | 23,7% | 6,7% | < 0,03% | < 0,01 % | < 0,03% |

Dans ces conditions d'essai plus contraignantes, les cinétiques de dégradation sont plus lentes mais l'écart reste toujours en faveur de l'assemblage A. Après 6 h d'immersion des assemblages, il ne reste plus dans le tampon phosphate que 2,51% du soman absorbé par l'assemblage A, contre 13,4% par l'assemblage B et 6,7% par l'assemblage C. Après 24h, les essais sont arrêtés et les assemblages sont également extraits. Il n'y a pas de différence entre les assemblages A et C (taux résiduel < 0,3% dans le tampon et l'assemblage), seul l'essai réalisé avec l'assemblage B permet de détecter 0,78% de soman dans l'assemblage et 0,7% dans le tampon (soit un total de 1,48%).

### Exemple 6 : Autres voies de préparation de la surface textile modifiée

### 1. Immobilisation du dérivé de cyclodextrine (1)

L'immobilisation du dérivé de cyclodextrine de formule (1) ci-dessous : 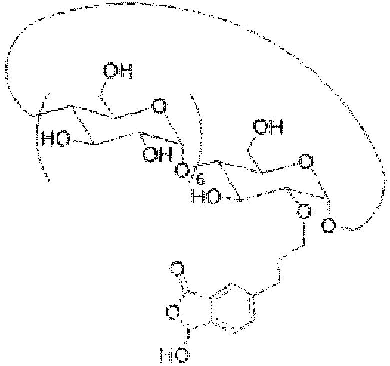 a été réalisée :
- soit selon un protocole identique à celui mis en oeuvre dans l'exemple 1, seul le temps de pré-séchage a été réduit à 10 minutes ;
- soit selon un protocole identique à celui mis en oeuvre dans l'exemple 1 mais en l'absence de cyanamide, le temps de pré-séchage a été réduit à 10 minutes.

Douze échantillons d'une taille 5 x 5 cm ont été assemblés par deux et cousus avec le textile modifié obtenu avec le dérivé (1) (Assemblage A1).

Douze échantillons d'une taille 5 x 5 cm ont été assemblés par deux et cousus avec le textile modifié obtenu avec la β-cyclodextrine (Assemblage A2).

### 2. Protocole de rinçage

6 protocoles différents de rinçage ont été réalisés pour les deux types d'assemblages A1 et A2 :
- soit par trois trempages successifs dans une solution tampon phosphate 20mM à pH 7,65 (15 mL) selon les temps suivants :
   - 3 x 30 s,
   - ou 3 x 1 min,
   - ou 3 x 2 min.
- soit par trois trempages successifs dans l'eau Milli-Q^{®} à pH 5,5 (15mL) selon les temps suivants :
   - 3 x 30 s,
   - ou 3 x 1 min,
   - ou 3 x 2 min.

### 3. Efficacité comparée des assemblages A1 et A2 sur la dégradation du paraoxon

Les conditions d'analyse sont identiques à celles de l'exemple 2, l'expérience a été réalisée une seule fois pour chaque assemblage A1 ou A2 ayant subi le même type de rinçage.

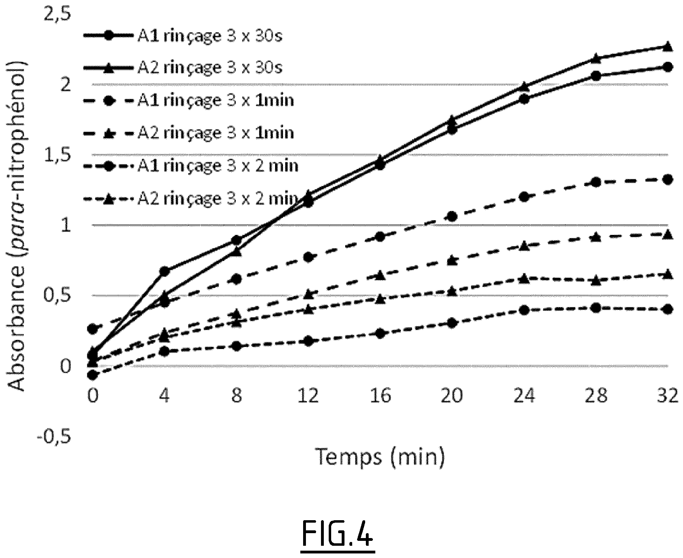

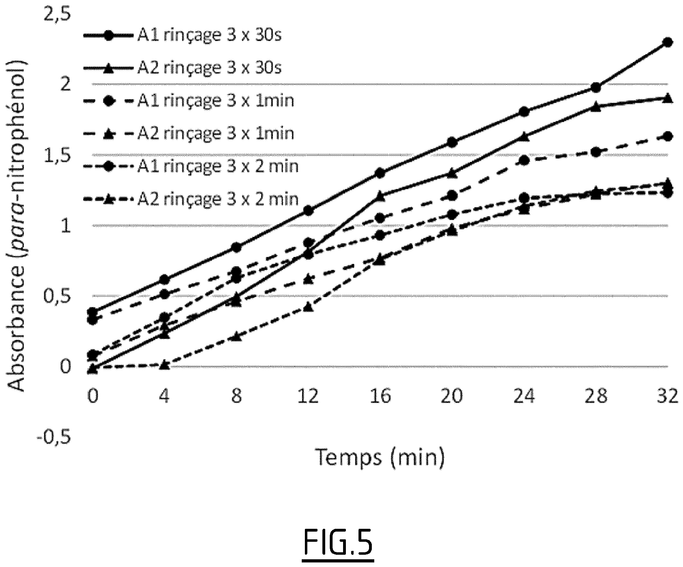

Les résultats sont représentés dans les figures 4 et 5.

Quels que soient les assemblages A1 et A2, la durée de rinçage augmente le taux de décrochage de l'épurateur à partir du support textile à pH 7,65. A pH 5,5, ce taux de décrochage se stabilise pour des durées de rinçage comprises entre 3 x 1 min et 3 x 2 min. La présence de cyanamide influe peu sur le taux d'épurateur immobilisé sur le support textile.

### Exemple 7 : Détermination des conditions optimales de fixation pour la préparation de la surface textile modifiée

### 1. Immobilisation du dérivé de cyclodextrine (1)

L'immobilisation du dérivé de cyclodextrine de formule (1) ci-dessous : 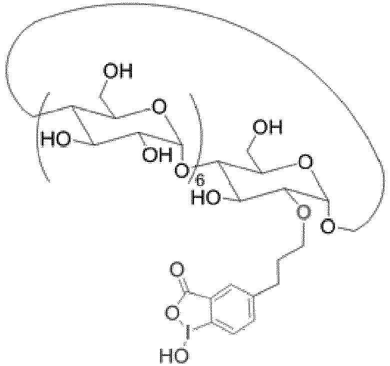 a été réalisée sur coton par l'utilisation d'un agent de pontage, l'acide 1,2,3,4-butanetétracarboxylique (BTCA), permettant de réticuler les unités oligosaccharidiques de l'épurateur (1) et de les greffer sur le support textile.

Le support textile (coton, format A4) a été immergé pendant 2 minutes dans un bain contenant le dérivé (1) de β-cyclodextrine (10%), l'acide 1,2,3,4-butanetétracarboxylique (BTCA, 10%), l'hypophosphite de sodium (3%) et le biphosphate d'ammonium (ADHP, 1%).

Le dérivé (1) a été préparé par la société Provepharm.

Le BTCA, l'hypophosphite de sodium et l'ADPH ont été fournis par la société Sigma-Aldrich.

Après foulardage à une pression de 1,5 bars, le tissu imprégné a été pré-séché pendant 10 minutes à 120°C. La fixation a été réalisée à 180°C pendant 3 minutes.

Douze échantillons d'une taille 5 x 5 cm ont été assemblés par deux et cousus avec le textile modifié obtenu avec le dérivé (1) (Assemblage A3).

### 2. Protocole de rinçage

6 protocoles différents de rinçage ont été réalisés selon les procédures décrites dans l'exemple 6 pour les assemblages A2 et A3.

### 3. Efficacité comparée des assemblages A1 et A3 sur la dégradation du paraoxon

Les conditions d'analyse de l'assemblage A3 sont identiques à celles de l'exemple 6 décrites pour les assemblages A1 et A2.

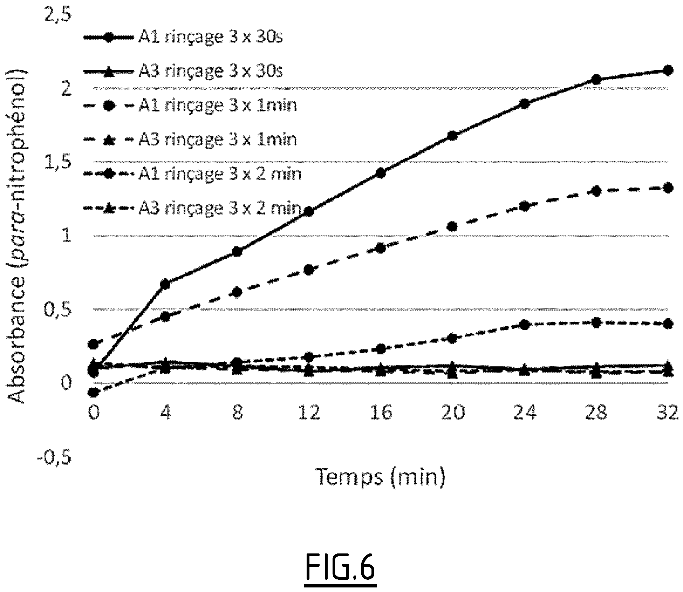

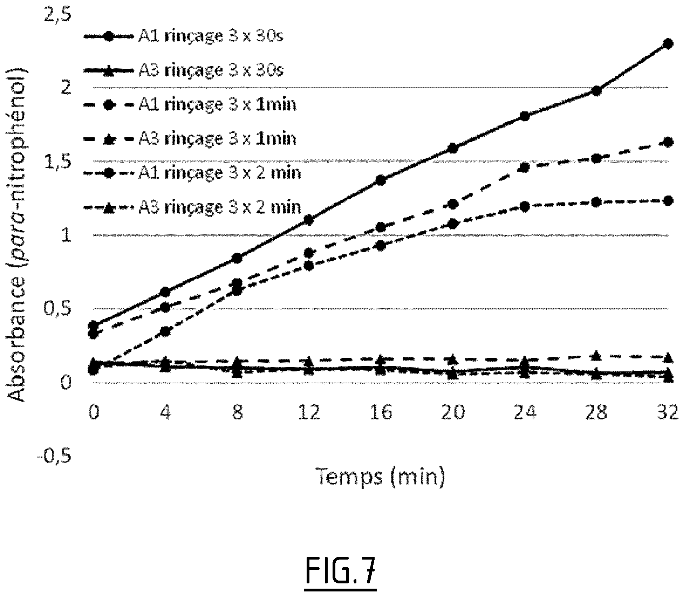

Les résultats sont représentés dans les figures 6 et 7.

Contrairement à l'assemblage A1 et quel que soit le procédé de rinçage utilisé, l'assemblage A3 n'entraine aucune accélération de la dégradation du paraoxon.

## Revendications

1. Procédé de modification d'un fil ou d'une surface textile par immobilisation sur ledit fil ou ladite surface d'un dérivé de cyclodextrine comportant un groupement réactif vis-à-vis d'agents organophosphorés,
ledit dérivé de cyclodextrine répondant à la formule (I) suivante : 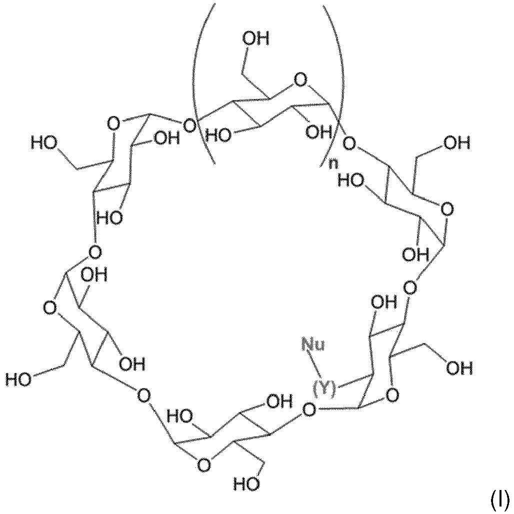 dans laquelle :
- n est 1, 2 ou 3 ;
- Y est un linker choisi dans le groupe constitué des groupements suivants :
• -O-(CH₂)ₘ-, m étant 1, 2, ou 3, de préférence 1 ou 3 ; 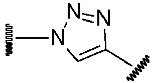
• -NH-C(=O)-(CH₂)ₚ-, p étant 0, 1, ou 2, de préférence 0 ou 2 ;
• -CONH-(CH₂)_{q}-, q étant 1, 2, ou 3, de préférence 1 ou 3 ;
• -C(=O)O-(CH₂)ᵣ-, r étant 1, 2, ou 3, de préférence 1 ou 3 ;
• -OC(=O)-(CH₂)ₛ-, s étant 0, 1, ou 2, de préférence 0 ou 2 ;
• -O-CH₂-C≡C-(CH₂)ₜ-, t étant 1, 2, ou 3, de préférence 1 ou 3 ;
- Nu répond à la formule (II) suivante : 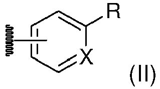 dans laquelle :
• soit R est COOH et X est C-I=O,
• soit R est CH=N-OH et X est N ou N⁺-(C₁-C₆)alkyle,
• soit R est CO-NH-OH et X est N,
ledit procédé comprenant une étape (a) de mise en contact dudit fil ou de ladite surface textile avec le dérivé de cyclodextrine de formule (I) et avec un agent de pontage choisi dans le groupe constitué de l'acide 1,2,3,4-butanetétracarboxylique, de l'acide succinique, de l'acide citrique, de l'acide oxalique et de leurs mélanges, optionnellement en présence d'un catalyseur ou d'un agent de couplage choisi dans le groupe constitué du cyanamide, du *N*,*N*,*N'*,*N'*-tétraméthyl-*O*-(*N-*succinimidyl)uronium tétrafluoroborate, du *O*-[*N*-succinimidyl)-1,1,3,3-tétraméthyluronium tétrafluoroborate (TSTU), du *O*-(5-norbornène-2,3-dicarboximido)-*N*,*N*,*N'*,*N'*-tétraméthyluronium tétrafluoroborate (TNTU) et du chlorure de 4-(4,6-diméthoxy-1,3,5-triazin-2-yl)-4-méthylmorpholinium,
pour obtenir un fil ou une surface textile sur lequel ou laquelle le dérivé de cyclodextrine de formule (I) est immobilisé.

2. Procédé selon la revendication 1, dans lequel l'étape (a) est effectuée en présence d'un catalyseur ou d'un agent de couplage choisi dans le groupe constitué du cyanamide, du *N*,*N*,*N'*,*N'*-tétraméthyl-*O*-(*N*-succinimidyl)uronium tétrafluoroborate, du *O*-[*N*-succinimidyl)-1,1,3,3-tétraméthyluronium tétrafluoroborate (TSTU), du *O*-(5-norbornène-2,3-dicarboximido)-*N*,*N*,*N'*,*N'*-tétraméthyluronium tétrafluoroborate (TNTU) et du chlorure de 4-(4,6-diméthoxy-1,3,5-triazin-2-yl)-4-méthylmorpholinium.

3. Procédé selon la revendication 1 ou 2, dans lequel l'agent de pontage est l'acide 1 ,2,3,4-butanetétracarboxylique et dans lequel le catalyseur est le cyanamide.

4. Procédé selon l'une quelconque des revendications 1 à 3, dans lequel le dérivé de cyclodextrine répond à la formule (IV) suivante :

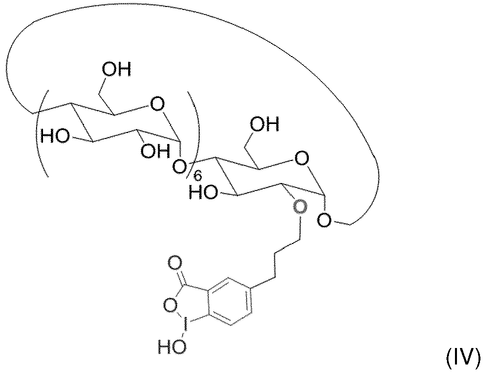

5. Procédé selon l'une quelconque des revendications 1 à 4, dans lequel la surface textile est une surface dont le textile est choisi dans le groupe constitué de fibres synthétiques ou de fibres cellulosiques naturelles ou artificielles, seules ou en mélange, et est notamment choisi dans le groupe constitué du coton, du lin, du chanvre, de la viscose, de l'acétate de cellulose, e l'alcool polyvinylique et l'acrylique.

6. Procédé selon l'une quelconque des revendications 1 à 5, dans lequel l'étape (a) est effectuée à une température inférieure à 130°C, et de préférence pendant une durée comprise entre 1 et 20 minutes.

7. Procédé selon l'une quelconque des revendications 1 à 6, comprenant en outre, après l'étape (a), une étape (b) de rinçage de la surface textile sur laquelle le dérivé de cyclodextrine de formule (I) est immobilisé, ladite étape (b) étant de préférence effectuée à une température inférieure à 40°C, pendant une durée inférieure à 90 minutes, notamment par trempage de la surface textile dans une solution aqueuse dont le pH est compris entre 5,5 et 7,65.

8. Surface textile modifiée sur laquelle est immobilisé un dérivé de cyclodextrine répondant à la formule (I) suivante : 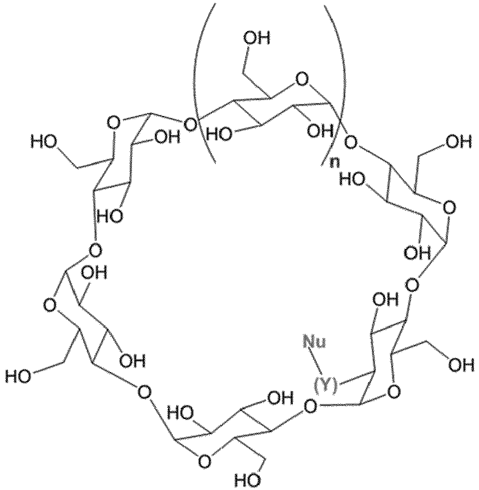 dans laquelle :
- n est 1, 2 ou 3 ;
- Y est un linker choisi dans le groupe constitué des groupements suivants :
• -O-(CH₂)ₘ-, m étant 1, 2, ou 3, de préférence 1 ou 3 ; 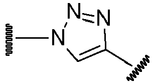
• -NH-C(=O)-(CH₂)ₚ-, p étant 0, 1, ou 2, de préférence 0 ou 2 ;
• -CONH-(CH₂)_{q}-, q étant 1, 2, ou 3, de préférence 1 ou 3 ;
• -C(=O)O-(CH₂)ᵣ-, r étant 1, 2, ou 3, de préférence 1 ou 3 ;
• -OC(=O)-(CH₂)ₛ-, s étant 0, 1, ou 2, de préférence 0 ou 2 ;
• -O-CH₂-C≡C-(CH₂)ₜ-, t étant 1, 2, ou 3, de préférence 1 ou 3 ;
- Nu répond à la formule (II) suivante : 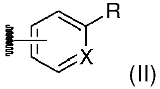 dans laquelle :
• soit R est COOH et X est C-I=O,
• soit R est CH=N-OH et X est N ou N⁺-(C₁-C₆)alkyle,
• soit R est CO-NH-OH et X est N.

9. Surface textile modifiée obtenue par le procédé selon l'une quelconque des revendications 1 à 7.

10. Utilisation d'une surface textile modifiée selon la revendication 8 ou 9, pour le piégeage et la dégradation d'agents neurotoxiques organophosphorés.

11. Utilisation d'une surface textile modifiée selon la revendication 8 ou 9, à titre de textile auto-décontaminant.

## Patentansprüche

1. Verfahren zur Modifizierung eines Garns oder einer textilen Oberfläche durch Immobilisierung eines Cyclodextrin-Derivats mit einen gegenüber phosphororganischen Wirkstoffen reaktiven Gruppe auf dem Garn oder der Oberfläche,
wobei das Cyclodextrin-Derivat folgender Formel (I) entspricht: 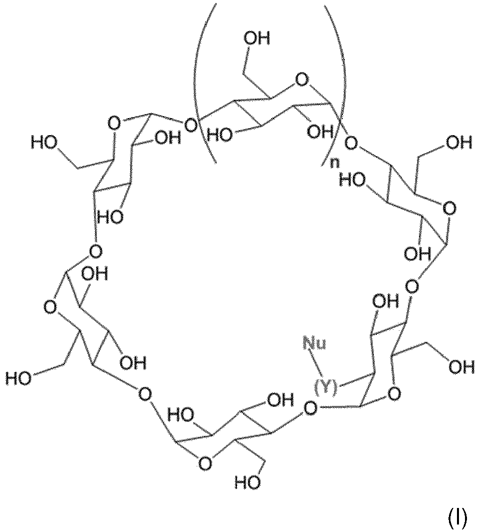 in der:
- n 1,2 oder 3 ist;
- Y ein Linker ist, der aus der Gruppe ausgewählt ist, die aus folgenden Gruppierungen besteht:
• -O-(CH₂)ₘ-, wobei m 1, 2 oder 3 ist, vorzugsweise 1 oder 3; 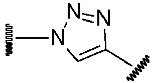
• -NH-C(=O)-(CH₂)ₚ-, wobei p 0, 1 oder 2, vorzugsweise 0 oder 2 ist;
• -CONH-(CH₂)_{q}-, wobei q 1, 2 oder 3, vorzugsweise 1 oder 3, ist;
• -C(=O)O-(CH₂)ᵣ-, wobei r 1, 2 oder 3, vorzugsweise 1 oder 3, ist;
• -OC(=O)-(CH₂)ₛ-, wobei s 0, 1 oder 2, vorzugsweise 0 oder 2, ist;
• -O-CH₂-C≡C-(CH₂)ₜ-, wobei t 1, 2 oder 3, vorzugsweise 1 oder 3 ist;
- Nu folgender Formel (II) entspricht: 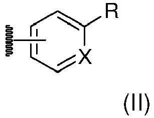 in der:
• entweder R gleich COOH und X gleich C-I=O ist,
• oder R gleich CH=N-OH und X gleich N oder N⁺-(C₁-C₆)-Alkyl ist,
• oder R gleich CO-NH-OH und X gleich N ist,
wobei das Verfahren einen Schritt (a) des Inkontaktbringens des Garns oder der Textiloberfläche mit dem Cyclodextrin-Derivat der Formel (I) und mit einem Haftmittel umfasst, ausgewählt aus der Gruppe bestehend aus 1,2,3,4-Butantetracarbonsäure, Bernsteinsäure, Zitronensäure, Oxalsäure und deren Mischungen, gegebenenfalls in Gegenwart eines Katalysators oder eines Kupplungsmittels, ausgewählt aus der Gruppe bestehend aus Cyanamid, *N*,*N*,*N'*,*N'-*Tetramethyl-*O*-(*N*-succinimidyl)uroniumtetrafluorborat, *O*-[*N*-Succinimidyl)-1,1,3,3-tetramethyluroniumtetrafluoroborat (TSTU), *O*-(5-Norbornen-2,3-dicarboximido)-*N*,*N*,*N'*,*N'*-tetramethyluroniumtetrafluoroborat (TNTU) und 4-(4,6-Dimethoxy-1,3,5-triazin-2-yl)-4-methylmorpholiniumchlorid, um ein Garn oder eine textile Oberfläche zu erhalten, auf der das Cyclodextrin-Derivat der Formel (I) immobilisiert ist.

2. Verfahren nach Anspruch 1, wobei Schritt (a) in Gegenwart eines Katalysators oder eines Kupplungsmittels durchgeführt wird, das aus der Gruppe ausgewählt ist, die besteht aus Cyanamid, *N*,*N*,*N'*,*N'*-Tetramethyl-*O*-(*N-*succinimidyl)uroniumtetrafluorborat, *O*-[*N*-Succinimidyl)-1,1,3,3-tetramethyluroniumtetrafluorborat (TSTU), *O*-(5-Norbornen-2,3-dicarboximido *N*,*N*,*N'*,*N'*-Tetramethyluroniumtetrafluoroborat (TNTU) und 4-(4,6-Dimethoxy-1,3,5-triazin-2-yl)-4-methylmorpholiniumchlorid.

3. Verfahren nach Anspruch 1 oder 2, wobei das Haftmittel 1,2,3,4-Butantetracarbonsäure ist und wobei der Katalysator Cyanamid ist.

4. Verfahren nach einem der Ansprüche 1 bis 3, wobei das Cyclodextrin-Derivat folgender Formel (IV) entspricht:

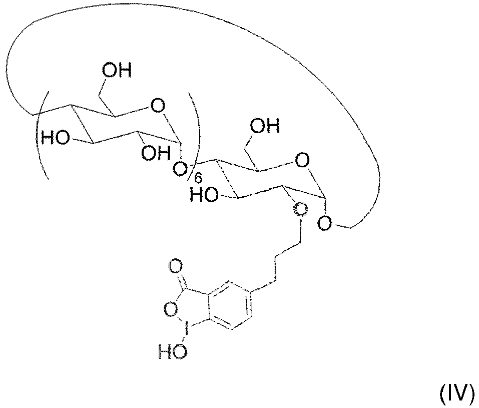

5. Verfahren nach einem der Ansprüche 1 bis 4, wobei die textile Oberfläche eine Oberfläche ist, deren Textil aus der Gruppe ausgewählt ist, die besteht aus synthetischen Fasern oder natürlichen oder künstlichen Zellulosefasern, allein oder in Mischung, und insbesondere ausgewählt ist aus der Gruppe bestehend aus Baumwolle, Leinen, Hanf, Viskose, Zelluloseacetat, Polyvinylalkohol und Acryl.

6. Verfahren nach einem der Ansprüche 1 bis 5, wobei Schritt (a) bei einer Temperatur von weniger als 130 °C und vorzugsweise für eine Dauer zwischen 1 und 20 Minuten durchgeführt wird.

7. Verfahren nach einem der Ansprüche 1 bis 6, das nach Schritt (a) außerdem einen Schritt (b) zum Spülen der textilen Oberfläche umfasst, auf der das Cyclodextrin-Derivat der Formel (I) immobilisiert ist, wobei der Schritt (b) vorzugsweise bei einer Temperatur unter 40 °C für eine Dauer von weniger als 90 Minuten durchgeführt wird, insbesondere durch Einweichen der textilen Oberfläche in einer wässrigen Lösung, deren pH-Wert zwischen 5,5 und 7,65 liegt.

8. Modifizierte textile Oberfläche, auf der ein Cyclodextrin-Derivat mit folgender Formel (I) immobilisiert ist: 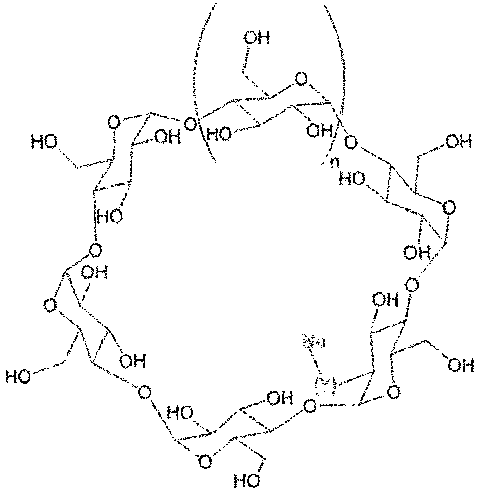 in der:
- n 1, 2 oder 3 ist;
- Y ein Linker ist, der aus der Gruppe ausgewählt ist, die aus folgenden Gruppierungen besteht:
• -O-(CH₂)ₘ-, wobei m 1, 2 oder 3 ist, vorzugsweise 1 oder 3; 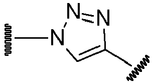
• -NH-C(=O)-(CH₂)ₚ-, wobei p 0, 1 oder 2, vorzugsweise 0 oder 2 ist;
• -CONH-(CH₂)_{q}-, wobei q 1, 2 oder 3, vorzugsweise 1 oder 3, ist;
• -C(=O)O-(CH₂)ᵣ-, wobei r 1, 2 oder 3, vorzugsweise 1 oder 3, ist;
• -OC(=O)-(CH₂)ₛ-, wobei s 0, 1 oder 2, vorzugsweise 0 oder 2, ist;
• -O-CH₂-C≡C-(CH₂)ₜ-, wobei t 1, 2 oder 3, vorzugsweise 1 oder 3 ist;
- Nu entspricht folgender Formel (II): 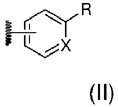 in der:
• entweder R gleich COOH und X gleich C-I=O ist,
• oder R gleich CH=N-OH und X gleich N oder N⁺-(C₁-C₆)-Alkyl ist,
• oder R gleich CO-NH-OH und X gleich N ist.

9. Modifizierte Textiloberfläche, die durch das Verfahren nach einem der Ansprüche 1 bis 7 erlangt wird.

10. Verwendung einer modifizierten textilen Oberfläche nach Anspruch 8 oder 9 zum Einfangen und Abbau von Organophosphor-Nervengiften.

11. Verwendung einer modifizierten textilen Oberfläche nach Anspruch 8 oder 9 als selbstdekontaminierendes Textil.

## Claims

1. A method for modifying a textile yarn or textile fabric by immobilising on said yarn or fabric a cyclodextrin derivative comprising a group reactive towards organophosphorus agents,
said cyclodextrin derivative having the following formula (I): 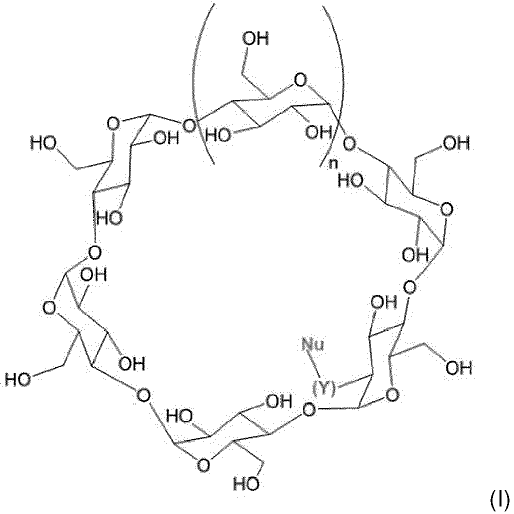 in which:
- n is 1, 2 or 3;
- Y is a linker selected from the following groups:
• -O-(CH₂)ₘ-, m being 1, 2, or 3, preferably 1 or 3; 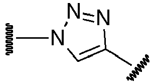
• -NH-C(=O)-(CH₂)ₚ-, p being 0, 1, or 2, preferably 0 or 2;
• -CONH-(CH₂)_{q}-, q being 1, 2, or 3, preferably 1 or 3;
• -C(=O)O-(CH₂)ᵣ-, r being 1, 2, or 3, preferably 1 or 3;
• -OC(=O)-(CH₂)ₛ-, s being 0, 1, or 2, preferably 0 or 2;
• -O-CH₂-C≡C-(CH₂)ₜ-, t being 1, 2, or 3, preferably 1 or 3;
- Nu has the following formula (II): 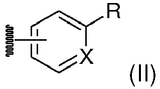 in which:
• either R is COOH and X is C-I=O,
• or R is CH=N-OH and X is N or N⁺-(C₁-C₆)alkyl,
• or R is CO-NH-OH and X is N,
said method comprising a step (a) of contacting said textile yarn or fabric with the cyclodextrin derivative of formula (I) and with a bridging agent selected from the group consisting of 1,2,3,4-butanetetracarboxylic acid, succinic acid, citric acid, oxalic acid and mixtures thereof,
optionally in the presence of a catalyst or coupling agent selected from the group consisting of cyanamide, *N*,*N*,*N'*,*N'*-tetramethyl-*O*-(*N*-succinimidyl)uronium tetrafluoroborate, *O*-*[N*-succinimidyl)-1,1,3,3-tetramethyluronium tetrafluoroborate (TSTU), *O*-(5-norbornene-2,3-dicarboximido)-*N,N,N',N'-*tetramethyluroniumtetrafluoroborate (TNTU) and 4-(4,6-dimethoxy-1,3,5-triazin-2-yl)-4-methylmorpholinium chloride,
to obtain a textile yarn or fabric on which the cyclodextrin derivative of formula (I) is immobilised.

2. The method according to claim 1, wherein step (a) is carried out in the presence of a catalyst or coupling agent selected from the group consisting of cyanamide, *N,N,N',N'*-tetramethyl-*O*-*(N*-succinimidyl)uronium tetrafluoroborate, *O-[N-*succinimidyl)-1,1,3,3-tetramethyluronium tetrafluoroborate (TSTU), *O*-(5-norbornene-2,3-dicarboximido)-*N,N,N',N'*-tetramethyluroniumtetrafluoroborate (TNTU) and 4-(4,6-dimethoxy-1,3,5-triazin-2-yl)-4-methylmorpholinium chloride.

3. The method according to claim 1 or 2, wherein the bridging agent is 1,2,3,4-butanetetracarboxylic acid and wherein the catalyst is cyanamide.

4. The method according to any one of claims 1 to 3, wherein the cyclodextrin derivative fulfils the following formula (IV):

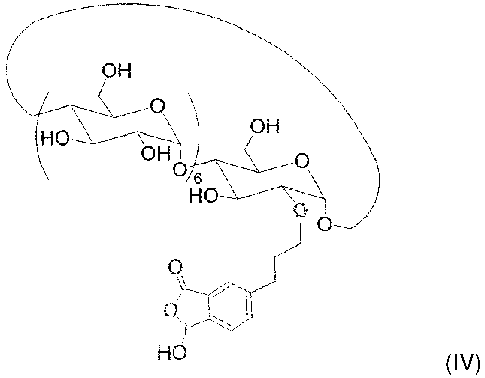

5. The method according to any one of claims 1 to 4, wherein the textile fabric is a fabric whose textile is selected from the group consisting of synthetic fibres or natural or artificial cellulosic fibres, alone or in a blend, and is in particular selected from the group consisting of cotton, linen, hemp, viscose, cellulose acetate, polyvinyl alcohol, and acrylic.

6. The method according to any one of claims 1 to 5, wherein step (a) is carried out at a temperature below 130°C, and preferably for a time between 1 and 20 minutes.

7. The method according to any one of claims 1 to 6, further comprising, after step (a), a step (b) of rinsing the textile fabric on which the cyclodextrin derivative of formula (I) is immobilised, said step (b) preferably being carried out at a temperature of less than 40°C, for a period of less than 90 minutes, in particular by soaking the textile fabric in an aqueous solution whose pH is between 5.5 and 7.65.

8. A modified textile fabric on which is immobilised a cyclodextrin derivative of the following formula (I): 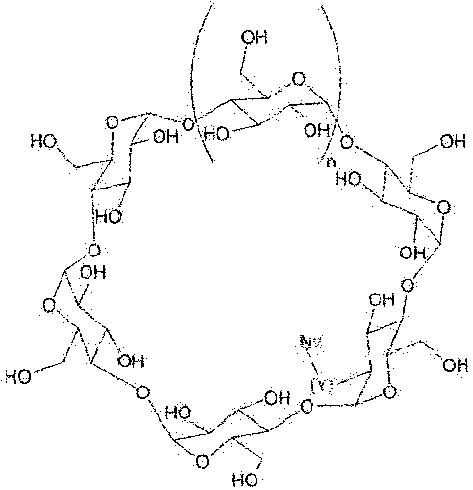 in which:
- n is 1, 2 or 3;
- Y is a linker selected from the following groups:
• -O-(CH₂)ₘ-, m being 1, 2, or 3, preferably 1 or 3; 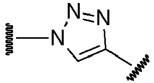
• -NH-C(=O)-(CH₂)ₚ-, p being 0, 1, or 2, preferably 0 or 2;
• -CONH-(CH₂)_{q}-, q being 1, 2, or 3, preferably 1 or 3;
• -C(=O)O-(CH₂)ᵣ-, r being 1, 2, or 3, preferably 1 or 3;
• -OC(=O)-(CH₂)ₛ-, s being 0, 1, or 2, preferably 0 or 2;
• -O-CH₂-C≡C-(CH₂)ₜ-, t being 1, 2, or 3, preferably 1 or 3;
- Nu has the following formula (II): 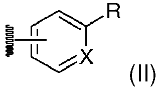 in which:
• either R is COOH and X is C-I=O,
• or R is CH=N-OH and X is N or N⁺-(C₁-C₆)alkyl,
• or R is CO-NH-OH and X is N.

9. A modified textile fabric obtained by the method according to any of claims 1 to 7.

10. Use of a modified textile fabric according to claim 8 or 9 for the trapping and degradation of organophosphorus nerve agents.

11. Use of a modified textile fabric according to claim 8 or 9 as a self-decontaminating textile.
